# EUROPÄISCHE PATENTSCHRIFT

(11) **EP 2 335 457 B1**
(45) Veröffentlichungstag und Bekanntmachung des Hinweises auf die Patenterteilung: **18.05.2016**
(21) Anmeldenummer: 09778536.4
(22) Anmeldetag: 15.09.2009
(51) Int. Cl.: H05B 41/282

(54) **BESTIMMUNG DES TYPS EINES LEUCHTMITTELS ODER DER TOPOLOGIE MEHRERER LEUCHTMITTEL**
DETERMINATION OF LAMP TYPE OR CIRCUIT TOPOLOGY FOR SEVERAL LAMPS
DETERMINATION DU TYPE DE LAMPE ET TOPOLOGIE DU CIRCUIT POUR PLUSIEURS LAMPES

(30) Priorität: 16.09.2008 DE 102008047440
(43) Veröffentlichungstag der Anmeldung: 22.06.2011
(73) Patentinhaber: Tridonic GmbH & Co KG, 6851 Dornbirn (AT)
(72) Erfinder: DÜNSER, Mathias, A-6800 Feldkirch (AT)
(74) Vertreter: Rupp, Christian
(86) Internationale Anmeldenummer: PCT/EP2009/006673
(87) Internationale Veröffentlichungsnummer: WO 2010/031535

(56) Entgegenhaltungen:
- EP-A2- 1 315 406
- WO-A1-2004/008815
- WO-A1-2009/036935
- DE-A1-102005 006 716
- US-A1- 2005 156 534
- US-B1- 6 414 449

## Beschreibung

Die Erfindung bezieht sich allgemein auf das Gebiet der Betriebsgeräte für Leuchtmittel und genauer gesagt auf Betriebsgeräte, an die zulässigerweise unterschiedliche Leuchtmitteltypen anschliessbar sind, wobei das Betriebsgerät dann in demselben Brennvorgang oder für einen folgenden Brennvorgang - ohne menschliche Mitwirkung - selbsttätig Betriebsparameter passend zu dem tatsächlich vorliegenden Leuchtmitteltyp einstellt. Dieser Vorgang wird im folgenden "Lampentyperkennung" genannt.

Aus der EP-A-0 413 991 ist bekannt, die Zündspannung der angeschlossenen Gasentladungslampe zu ermitteln und aufgrund der ermittelten Zündspannung auf den Lampentyp zu schließen. Die Bestimmung der Zündspannung hängt jedoch unter anderem vom Hersteller, dem Alterungsgrad, der Gasfüllung und der Heizung der Lampe ab, so dass sich insgesamt Schwankungen im Bereich zwischen 10% und 20% beim Ermitteln der Zündspannung ergeben können.

Aus der EP 702508A1 ist es bekannt, nach Inbetriebnahme der Gasentladungslampe verschiedene Lampenstrom-Sollwerte vorzugeben und den Lampenstrom entsprechend dieser Sollwerte einzustellen. Zu jedem Lampenstrom-Sollwert wird der entsprechende Istwert der zu überwachenden Betriebsgröße der Gasentladungslampe ermittelt. Die einzelnen somit erhaltenen Istwerte der Betriebsgrößen werden miteinander kombiniert, so dass anschließend aufgrund der Istwerte abhängig von den vorgegebenen Lampenstrom-Sollwerten auf den Lampentyp der angeschlossenen Gasentladungslampe geschlossen werden kann. Zu diesem Zweck ist beispielsweise die Auswertung von verschiedenen vorgegebenen Kennlinien der einzelnen Lampentypen denkbar. So können beispielsweise die Strom/Spannungs-Kennlinien verschiedener Lampentypen bekannt sein. Wie zuvor beschrieben, werden verschiedene Strom-Sollwerte eingestellt und entsprechend die Lampenspannung abhängig von den eingestellten Strom-Sollwerten ermittelt. Anhand der ermittelten Strom/Spannungs-Wertepaare und der verschiedenen vorhandenen Strom/Spannungs-Kennlinien kann auf den Lampentyp der angeschlossenen Gasentladungslampe geschlossen werden. Insbesondere ist vorgesehen, als Betriebsgröße für die Lampentyperkennung die Lampenspannung (Uist) oder den Wendelwiderstand (Rist) der Gasentladungslampe zu ermitteln.

Wurde der Lampentyp der angeschlossenen Gasentladungslampe festgestellt, so wird dieser vorzugsweise in einem Speicher in Form von verschiedenen Betriebsparametern oder in Form der entsprechenden Lampenkennlinie gespeichert, so dass der Lampentyp nicht ständig überprüft und ermittelt werden muss, solange die entsprechende Gasentladungslampe nicht ausgewechselt worden ist. Ein Austauschen der Lampe kann dabei durch Erfassen einer eventuellen Unterbrechung des Heizstromkreises ermittelt werden.

Aus der DE 198 50 441 A1 ist ein Vorschaltgerät zum Betrieb einer mit einer Leuchtstofflampe versehenen Leuchte bekannt, wobei die Betriebsdaten bestimmter mit diesem Verfahren erkennbarer Lampentypen, zumindest deren Lampennennspannung sowie der Lampennennstrom, in einem Register gespeichert sind, die Leuchtstofflampe innerhalb einer Startphase während einer vorbestimmten Zeit mit einem Dimmstrom bekannter Stromstärke betrieben wird, nach der Startphase die vorliegende Lampenspannung der Leuchtstofflampe gemessen wird, dann in dem Register diejenige Lampennennspannung gesucht wird, die der gemessenen Lampenspannung der Leuchtstofflampe am nächsten kommt, und danach die zum Betrieb der Leuchtstofflampe erforderlichen Betriebsdaten eingestellt werden, die der gemessenen Lampenspannung per Register zugeordnet sind.

Bei einer Lampentyperkennung ausgehend von Wendelparametern (beispielsweise deren ohmscher Widerstand) besteht der Nachteil, dass dies nicht immer eine eindeutige Lampenidentifizierung zur Folge hat. Der Grund dafür ist, dass bei einheitlichem Lampentyp einerseits der ohmsche Widerstand einer Wendel beispielsweise um bis zum 25% schwanken kann und gleichzeitig der Wendelwiderstand unterschiedlicher Lampentypen etwa in dieser Größenordnung liegen kann. Darüber hinaus können auch grundsätzlich unterschiedliche Lampentypen denselben Wendelwiderstand aufweisen.

Hinsichtlich der erwähnten DE 198 50 441 A1 und EP 702508 A1 ist anzumerken, dass die dort verwendeten Verfahren mehrere Nachteile aufweisen. Der Nachteil einer Lampentyperkennung basierend auf der Einstellung eines Stromes ist, dass sich ein Großteil der möglichen Lampentypen nicht durch dieses Verfahren erkennen bzw. unterscheiden lässt. Aufgrund der Lampencharakteristik kann sich für verschiedene Lampentypen bei einem eingeprägten Strom abhängig von der Umgebungstemperatur eine annähernd gleiche Lampenbrennspannung ergeben, die unter Beachtung der Herstellertoleranzen nicht mehr unterschieden werden kann. Sofern die Umgebungs- oder Lampentemperatur nicht bekannt ist, ist dieses Verfahren nur für einen sehr eingeschränkten Temperaturbereich geeignet.

Weiter ist aus dem Dokument US 2005/156534 A1 ein Lampenregelkreis bekannt, der eine mit einem digital gesteuerten Vorschaltgerät gekoppelte PFC-Schaltung und Leistungselektronikbausteine aufweist. Das Vorschaltgerät wird durch eine Stromrückkopplungsschleife, die zwischen den Leistungsbauelementen und dem digital gesteuerten Vorschaltgerät angeordnet ist, und eine Spannungsrückkopplungsschleife gesteuert, die zwischen der Lampe und dem digital Vorschaltgerät vorgesehen ist. Weiter ist ein Verfahren zum Betreiben einer Lampen-Steuerschaltung beschrieben, wobei die Schaltung eine digitale Steuerung, eine Ausgangsstufe, eine Stromrückkopplungsschleife und eine Spannungsrückkopplungsschleife aufweist. Im Betrieb empfängt die digitale Steuerung ein Stromrückkopplungssignal oder ein Spannungsrückkopplungssignal von der Ausgangsstufe und der Lampe. Als Reaktion auf das empfangene Signal erzeugt die digitale Steuerung ein digitales Steuersignal und betreibt die Lampe mittels der Ausgangsstufe gemäß dem erzeugten digitalen Steuersignal.

Das Dokument EP 1315406 A2 beschreibt eine elektronische Stromversorgungsschaltung zum Zuführen von Hochfrequenzleistung an Leuchtstofflampen verschiedener Typen und Leistungen, wobei die Lampe durch Messung der absorbierten Wirkleistung (active power) erkannt wird und mit geeigneten Strom- und Spannungswerten versorgt wird.

Dokument WO 2009/036935 A1 beschreibt ein Betriebsgerät für Leuchtmittel mit unterschiedlichen Betriebsparametern, enthaltend Anschlussmittel zum Anschließen des Betriebsgerätes an mindestens eine externe Spannungsquelle, Energieumwandlungsmittel zum Umwandeln der von der externen Spannungsquelle gelieferten Energie in eine zur Versorgung des mit dem Betriebsgerät zu betreibenden Leuchtmittels geeignete Form durch Anpassung der Betriebsparameter und Mittel zum Anschließen des Leuchtmittels an das Betriebsgerät. Weiter weist das Betriebsgerät Konfigurierungsmittel auf zur Auswahl einer aus mehreren möglichen Kennungen für den/die gewünschten Betriebsparameter des mit dem Betriebsgerät zu betreibenden Leuchtmittels und zum Übertragen der Kennung an das Betriebsgerät, Auswertemittel zur Auswertung der Kennung durch Vergleichen derselben mit den Werten einer in dem Betriebsgerät abgelegten Tabelle, und Steuermittel zum Beeinflussen der EnergieUmwandlungsmittel derart, dass diese den/die erforderlichen Betriebsparameter für das mit dem Betriebsgerät zu betreibende Leuchtmittel entsprechend dem Auswerteergebnis einstellen.

Dokument US 6,414,449 B1 beschreibt ein elektronisches Vorschaltgerät, das in der Lage ist, Leuchtstofflampen in einem Bereich von Nennbetriebsleistungen zu betreiben. Das elektronische Vorschaltgerät ist in der Lage, eine Leistung einer Lampe aus dem Spitzenwert der Lampenspannung zu ermitteln und stellt eine variierende Schaltfrequenz des Vorschaltgerätes in Abhängigkeit von der Lampenleistung bereit.

Dokument WO 2004/008815 A1 beschreibt eine Erkennung einer Fluoreszenzlampe durch Zuführen eines amplitudenmodulierten Lampenstroms und Vergleichen der auftretenden Amplitude der Spannungsspitze, wenn die Amplitude des Lampenstroms mit den Amplituden der Spannungsspitzen bekannter Lampen steil ansteigt, die in einem Speicher gespeichert sind.

Um dem Anwender einen möglichst weiten Umgebungstemperaturbereich zu ermöglichen, ohne dabei eine Temperaturmessung durchführen zu müssen, wird daher das erfindungsgemäße Verfahren vorgeschlagen.

Die Aufgabe wird gemäß Anspruch 1 gelöst durch ein Verfahren zur Bestimmung des Typs eines Leuchtmittels oder der Topologie mehrerer Leuchtmittel, das/die mit einer Wechselspannung variabler Frequenz betrieben wird/werden. Dabei wird die dem/den Leuchtmittel/n zugeführte Leistung durch Variation der Frequenz auf einen bestimmten Wert geregelt. Die sich in Folge der Regelung einstellende Frequenz wird durch Vergleich mit bekannten Frequenzwerten zur Typ- oder Topologiebestimmung ausgewertet. Dies kann wiederum verwendet werden, um davon abhängig Betriebsparameter der Leuchtmittel einzustellen.

Unter "Topologie" ist dabei insbesondere die Art der Verschaltung (Einfach/Parallel/Seriell) gleichartiger Leuchtmittel zu verstehen.

Unter "Typ" ist dabei insbesondere die Leistungsklasse ("Wattage") gleichartiger Leuchtmittel zu verstehen.

Eine Weiterbildung des erfindungsgemäßen Verfahrens kann darin bestehen, dass die Wechselspannung im Rahmen der Leistungsregelung konstant gehalten wird. Dabei kann die Konstanthaltung der Wechselspannung ebenfalls durch Regelung erfolgen.

Ein anderer Vorschlag zur Weiterbildung besteht darin, dass bei dem die Messung der Frequenz bei einer der/den Leuchtmittel/n zugeführten Leistung erfolgt, die gegenüber der Maximalleistung reduziert ist. Die reduzierte Leistung sollte einem Dimmgrad von weniger als 50 %, vorzugsweise weniger als 10 % und noch weiter bevorzugt ca. 1 % betragen. Dem Vorschlag der Leistungsreduzierung bei der Messung liegt die Erkenntnis zugrunde, dass die von der Frequenz abhängige Leistungscharakteristik des hier betrachteten Leuchtmittels bei einem so niedrigen Dimmgrad die geringste Temperaturabhängigkeit zeigt. Dadurch können sich bei unterschiedlichen Leuchtmitteln entsprechend unterschiedliche Regelfrequenzen auch dann unterschieden werden, wenn die von der Frequenz abhängigen Leistungskennlinien eng beieinander liegen. Dies gilt insbesondere dann, wenn das/die Leuchtmittel von einer bzw. mehreren Leuchtstofflampen gebildet ist/sind.

Das Ergebnis einer Bestimmung des Leuchtmitteltyps oder der Leuchtmitteltopologie von Leuchtmitteln, die durch ein Betriebsgerät versorgt werden, kann von diesem Betriebsgerät drahtlos oder über einen angeschlossenen Bus an eine zentrale Steuereinheit und/oder an wenigstens ein weiteres Betriebsgerät gesandt werden. Die zentrale Steuereinheit kann dann abhängig von den eingegangenen Bestimmungsdaten Befehle an dieses Betriebsgerät senden, insbesondere Befehle, die die Helligkeit der angeschlossenen Leuchtmittel beeinflussen.

Die Bestimmung kann einmalig, insbesondere bei der ersten Inbetriebnahme, oder wiederholt, insbesondere bei jedem Wiedereinschalten einer Versorgungsspannung des Betriebsgeräts durchgeführt wird.

Das Ergebnis der Bestimmung oder ein oder mehrere daraus abgeleitete Parameter kann/können in einem Speicher abgelegt werden, der bspw. dem die Bestimmung durchführenden Betriebsgerät oder einer zentralen Steuereinheit zugeordnet ist.

Die Erfindung betrifft ferner ein Betriebgerät zum Betreiben eines Leuchtmittels oder eines aus mehreren Leuchtmitteln bestehenden Leuchtmittel-Packs, aufweisend eine Gleichspannungsquelle,
einen sich an die Gleichspannungsquelle anschließenden Wechselrichter mit getakteten Schaltern, einen sich an den Wechselrichter anschließenden Serienresonanzkreis, zu dessen Resonanzkapazität das Leuchtmittel bzw. der Leuchtmittel-Packs parallel zu schalten ist,
einen Leistungsregler, der als Stellwert die Schaltfrequenz für die Schalter ausgibt, dem als Ist-Wert der durch den Wechselrichter fließende Strom sowie die Gleichspannung der Gleichspannungsquelle und/oder die Spannung über dem Leuchtmittel bzw. dem Leuchtmittel-Pack und ferner extern oder intern ein Soll-Wert zugeführt wird,
und Mittel, die die von dem Leistungsregler ausgegebene Schaltfrequenz mit bekannten Schaltfrequenz-Werten vergleicht und dadurch den Typ des angeschlossenen Leuchtmittels oder die Topologie der das Leuchtmittel-Pack bildenden Leuchtmittel bestimmt.

Unter "Topologie" ist dabei wiederum insbesondere die Art der Verschaltung (Einfach/Parallel/Seriell) gleichartiger Leuchtmittel zu verstehen.

Unter "Typ" ist dabei wiederum insbesondere die Leistungsklasse ("Wattage") gleichartiger Leuchtmittel zu verstehen.

Das Betriebsgerät sollte gemäß einer Weiterbildung ferner Mittel aufweisen, die aufgrund des bestimmten Leuchtmittel-Typs oder der Topologie des Leuchtmittel-Packs den/die passenden Betriebsparameter für das Leuchtmittel bzw. das Leuchtmittel-Pack einstellen.

Ferner sollte das Betriebsgerät Mittel zum Konstanthalten oder Konstantregeln der Gleichspannung der Gleichungsquelle enthalten.

Die Gleichspannungsquelle kann von einem an das Netz anzuschließenden Gleichrichter gebildet sein.

Vorzugsweise sollte/n das/die Leuchtmittel von einer bzw. mehreren Leuchtstofflampen gebildet sein.

Der Soll-Wert für den Leistungsregler kann ein Dimmsignal sein, welches die von dem/den Leuchtmittel/n aufgenommen Leistung auf weniger als 50 %, vorzugsweise weniger als 10 % und noch weiter bevorzugt auf ca. 1 % reduziert.

Schliesslich bezieht sich die Erfindung auch auf ein Beleuchtungssystem, aufweisend ein Betriebsgerät der oben angeführten Art, sowie wenigstens ein damit drahtlos oder drahtgebunden in Datenaustausch stehendes weiteres Betriebsgerät und/oder zentrale Steuereinheit.

Ein Betriebsgerät in diesem System kann Daten bzgl. der von ihm vorgenommenen Lampentyp- oder Lampentopologiebestimmung an ein weiteres Betriebsgerät oder an die zentrale Steuereinheit senden.

Die zentrale Steuereinheit kann abhängig von den erhaltenen Bestimmungsdaten Befehle, Helligkeitsbefehle, vorzugsweise an das die Bestimmungsdaten aussendende Betriebsgerät senden.

Ein Ausführungsbeispiel der Erfindung wird nachfolgend anhand der Zeichnung beschrieben.

Es zeigen:
- Fig. 1: ein Betriebsgerät zum Betreiben eines Lampen-Packs (Lampenstrecke) mit vier Leuchtstofflampen;
- Fig. 2: die Kurvenscharen von zwei verschiedenen Lampen-Packs für die Abhängigkeit der Leistung von der durch Regelung eingestellten Schaltfrequenz, wobei Parameter der Kurvenscharen die Temperatur ist.

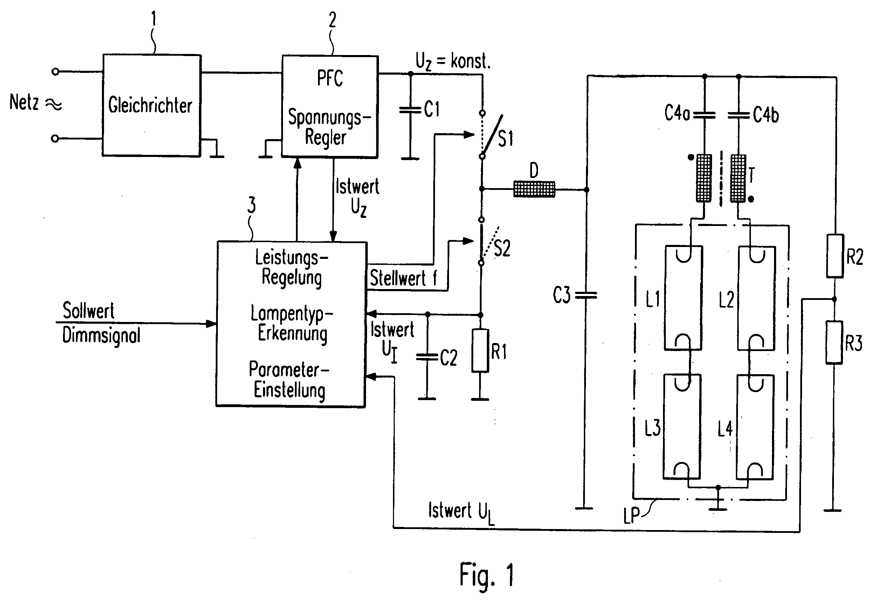

Das in Fig. 1 gezeigte Betriebsgerät weist einen an das Netz anzuschließenden Gleichrichter 1 auf, an den sich ein Leistungsfaktor-Regler 2 anschließt, der eine pulsierende Zwischenkreis-Gleichspannung U_{Z} ausgibt, welche einem Glättungskondenstor C1 zugeführt wird. Am Ausgang des Glättungskondensators C1 liegt eine von zwei getakteten Schaltern S1 und S2 gebildete Halbbrücke, die an ihrem kalten Ende über einen Widerstand R1 an Masse geführt ist. Die beiden Schalter S1 und S2 werden wechselweise geöffnet und geschlossen. Die Steuersignale für die beiden Schalter S1 und S2 werden von einem Block 3 ausgegeben, der als ASIC ausgeführt sein kann, und mehrere Funktionen vereinigt.

Der Halbbrückenstrom fließt über den Widerstand R1, zu dem noch ein Glättungskondensator C2 parallel geschaltet ist. Der durch R1 fließende Strom erzeugt einen Spannungsabfall U_{I}, der den Block 3 als Ist-Wert für den Brückenstrom zugeführt wird.

Von dem Knotenpunkt zwischen den beiden Schaltern S1 und S2 der Halbbrücke geht eine Drossel D aus, die zusammen mit einem Resonanzkondensator C3 einen Serienresonanzkreis bildet. Die über dem Resonanzkondensator C3 abfallende Spannung wird dem aus vier Leuchtstofflampen L1 bis L4 bestehenden Leuchtmittel-Pack LP über zwei Kopplungskondensatoren C4a und C4b zugeführt, wobei der Kopplungskondensator C4a in dem Pfad der Leuchtstofflampen L1 und L3 liegt und der Kopplungskondensator C4b in dem Pfad der Leuchtstofflampen L2 und L4 liegt. Ferner liegt in beiden Pfaden je eine von zwei zueinander gegensinnig gewickelten und miteinander gekoppelten Wicklungen eines Symmetrietransformators T.

Die über dem Leuchtmittel-Pack LP abfallende Spannung wird einem Spannungsteiler R2/R3 zugeführt. Die über dem Widerstand R3 abfallende Spannung wird dem Block 3 als Ist-Wert für die Lampenspannung U_{L} zugeführt.

Schließlich wird dem Block 3 noch ein externes Dimmsignal als Soll-Wert für die Leistungsregelung zugeführt.

Das in Fig. 1 gezeigte Betriebsgerät hat die Eigenschaft, dass es selbstständig die Konfiguration der Leuchtstofflampen L1 bis L4 in dem Lampen-Pack LP erkennt und von anderen Konfigurationen unterscheiden kann. Eine andere Konfiguration wäre beispielsweise eine solche mit nur drei Leuchtstofflampen L1 bis L3, wobei die vierte Leuchtstofflampe L4 weggelassen ist. In diesem Fall könnte beispielsweise die Leuchtstofflampe L4 durch eine Überbrückung weggelassen werden. Die Überbrückung kann innerhalb des Betriebsgerätes auf der Leiterbahn oder auch außerhalb durch eine Überbrückung an den Anschlüssen erfolgen.

Dem Block 3 obliegen neben der Leistungsregelung noch die Erkennung des Lampentyps bzw. der Topologie des Leuchtmittel-Packs und ferner die Einstellung der Betriebsparameter, wenn das Leuchtmittel bzw. die Topologie des Leuchtmittel-Packs erkannt worden ist.

Damit der Block 3 die genannte Funktion erfüllen kann, ist es zunächst erforderlich, dass die dem Leuchtmittel bzw. Leuchtmittel-Pack LP zugeführte Leistung auf einen konstanten Wert geregelt wird. Aus dem Ist-Wert Uz und dem Ist-Wert U_{I} bildet der Block 3 einen Leistungs-Ist-Wert, den er mit dem als Dimmsignal eingegebenen Soll-Wert vergleicht und dann einen Stellwert bildet. Der Stellwert ist die Schaltfrequenz f für die Schalter S1 und S2 der Halbbrücke. Es versteht sich, dass durch Veränderung der Schaltfrequenz für die Schalter S1 und S2 der Halbbrücke die dem Leuchtmittel bzw. dem Leuchtmittel-Pack LP zugeführte Leistung verändert werden kann. Der Stellwert, d. h. die Schaltfrequenz für die Schalter S1 und S2 stellt sich dabei als selbsttätig als Folge der Leistungsregelung ein. Alternativ kann die dem Leuchtmittel bzw. Leuchtmittel-Pack LP zugeführte Leistung auch über die Regelung der beiden Ist-Werte Lampenspannung U_{L} und Lampenstrom erfolgen, allerdings sind in diesem Fall weitere Erfassungen von Ist-Werten durch den Block 3 erforderlich.

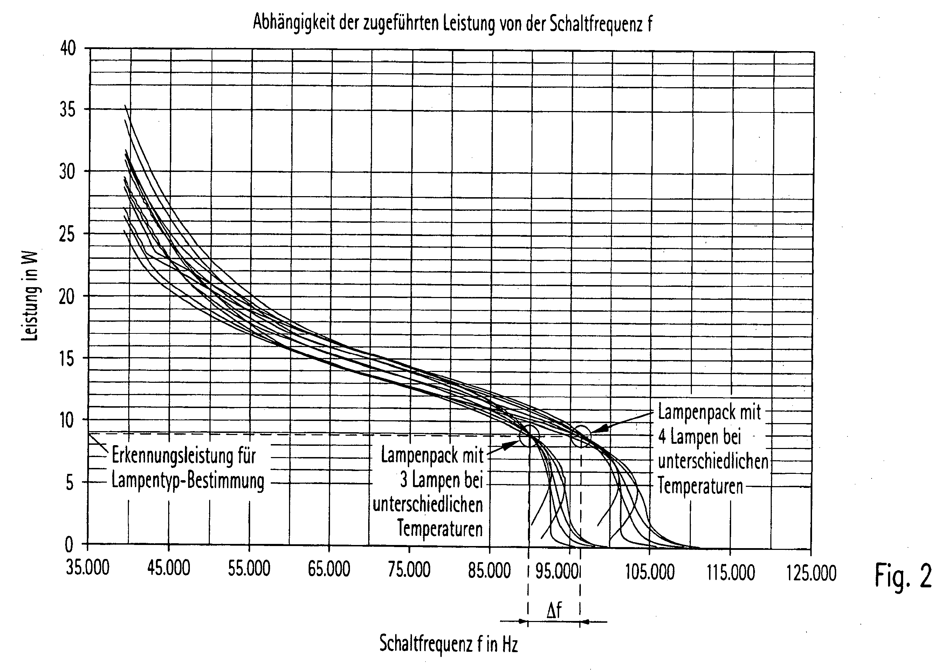

Betrachtet man die Abhängigkeit der Leistung jedes der beiden Lampen-Packs in Abhängigkeit von der Schaltfrequenz, wie sie in Fig. 2 dargestellt ist, so erkennt man, dass die Leistung mit der Frequenz abnimmt. Dabei stellt das Betriebsgerät für eine gleiche eingeregelte Erkennungsleistung von etwa 9 W unterschiedliche Schaltfrequenzen ein. Die Schaltfrequenz für das Lampen-Pack mit drei Lampen liegt bei etwa 90 kHz, während die Schaltfrequenz für das Lampen-Pack mit vier Lampen bei etwa 97 kHz liegt. Die Frequenz Δf beträgt also etwa 7 kHz.

Wie man der Fig. 2 entnehmen kann, besteht jede der beiden Leistungs-Kurven aus einer Kurvenschar, wobei die Temperatur Parameter ist. Die Kurvenschar läuft oberhalb und unterhalb der Erkennungsleistung von 9 W auseinander. Bei der Erkennungsleistung von 9 W zeigen die von der Frequenz abhängigen Leistungskurven der beiden Lampen-Packs praktisch keine Abhängigkeit von der Temperatur. Dies erlaubt eine sehr genaue differenzierte Unterscheidung zwischen verschiedenen Leuchtmitteln bzw. Leuchtmittel-Packs.

Die Erkennungsleistung ist allerdings sehr gering. Um sie einzuregeln, muss dem Block 3 ein Dimmsignal als Soll-Wert für die Leistungsregelung zugeführt werden, dass im vorliegenden Fall ein Abwärtsdimmen der Leistung auf weniger als 10 % von der maximalen möglichen Leistung gewährleistet.

Wenn der Block 3 den Lampentyp bzw. die Topographie des Leuchtmittel-Packs durch Vergleich mit einer in dem Block 3 niedergelegten Tabelle erkannt hat, werden die entsprechenden Parameter zum optimalen Betrieb der Leucht- bzw. des Leuchtmittel-Packs ausgewählt und eingestellt. Solche Parameter sind beispielsweise die Lampenspannung, der Lampenstrom, die Heizleistung, die Zwischenkreisspannung und das Taktverhältnis der Stellwertsignale für die Schalter S1 und S2.

Die entsprechenden Parameter, die zum optimalen Betrieb der Leuchtmittels bzw. des Leuchtmittel-Packs ausgewählt und eingestellt werden, können auch Schwellwerte für Fehlerabschaltungen sein. Beispielsweise kann abhängig von der erkannten Anzahl der in Serie geschalteten Leuchtmittel der Schwellwert für eine Gleichrichteffekterkennung oder auch Lampenüberspannung angepasst werden. Es können auch weitere Parameter für das Betriebsgerät eingestellt werden, beispielsweise die Dynamik (bspw. Zeitkonstanten) oder andere Eigenschaften des Leistungsfaktor-Reglers 2.

Man erkennt, dass das Betriebsgerät hinsichtlich der Auswahl der Parameter natürlich selbstständig arbeitet.

Als einfache Ausführung kann das erfindungsgemäße Verfahren auch folgendermaßen durchgeführt werden:
* Einstellen der dem/den Leuchtmittel/n zugeführten Leistung durch Einstellen der Frequenz (f) eines die Leuchtmittel versorgenden Wechselrichters mit nachgeschaltetem Resonanzkreis, insbesondere Serienresonanzkreis, auf einen bestimmten Wert,
* Bestimmung des Typ eines Leuchtmittel (L) oder der Topologie mehrerer Leuchtmittel (L1 bis L4), durch Messung und Auswertung der über dem Leuchtmittel (L) bzw. dem Leuchtmittel-Pack (LP) anliegenden Spannung (UL). Davon abhängig können wiederum Betriebsparameter der Leuchtmittel eingestellt werden.

Da der an den Wechselrichter (bspw. Halbbrücke) angeschlossene Serienresonanzkreis eine Stromquellencharakteristik aufweist, ist eine einfache Unterscheidung, wie viele Lampen in Serie oder parallel geschaltet sind, auch möglich, wenn die Leistung nur über eine vordefinierte Frequenz eingestellt, aber nicht geregelt wird. Wenn nur der Anschluß eines Lampentyps oder ähnlicher Lampentypen vorgesehen ist, wird sich annähernd der gleiche Lampenstrom sowohl für eine einzelne Lampe als auch für zwei in Serie geschaltete Lampen einstellen. Die Spannung über die gesamte Leuchtmittelstrecke wird jedoch bei einer Serienschaltung von zwei Leuchtmitteln etwa doppelt so hoch sein wie die Spannung bei nur einer angeschlossenen Lampe.

Für eine genauere Erfassung, beispielsweise wenn verschiedene Lampentypen mit unterschiedlichen Betriebscharakteristiken anschliessbar sind, kann jedoch eine Regelung der Leistung erforderlich sein.

Entsprechend der in dem Block 3 niedergelegten Tabelle kann anhand der sich einstellenden Spannung (UL) über dem Leuchtmittel (L) bzw. dem Leuchtmittel-Pack (LP) auf die Topologie, d.h. beispielsweise die Anzahl der angeschlossenen Leuchtmittel geschlossen werden.

Das Ergebnis der Bestimmung des Typ eines Leuchtmittel (L) oder der Topologie mehrerer Leuchtmittel (L1 bis L4) kann auch drahtlos oder über ein Bussystem (bspw. gemäss dem DALI-Standard), an welches das Betriebsgerät angeschlossen ist, an andere an das Bussystem angeschlossene Teilnehmer (auch an eine zentrale Steuereinheit) übermittelt werden. So kann beispielsweise eine automatische Einstellung für ein Beleuchtungssystem erfolgen, das mehrere Betriebsgeräte aufweist, die drahtlos und/oder drahtgebunden miteinander kommunizieren können. Optional kann auch eine zentrale Steuereinheit für das Beleuchtungssystem vorgesehen sein.

Sofern alle angeschlossenen Betriebsgeräte die Anzahl und / oder den Typ der angeschlossenen Leuchtmittel zurückmelden, kann die zentrale Steuereinheit die maximal erreichbare Helligkeit ermitteln. Die aktuell einzustellende Helligkeit des Beleuchtungssystems kann dann dahingehend angepasst werden, dass die zentrale Steuereinheit unter Beachtung der aktuell angeschlossenen Anzahl und Leistung (entsprechend dem Typ) der angeschlossenen Leuchtmittel den aktuell notwendigen Helligkeitsbefehl für das Beleuchtungssystem ermittelt. Somit kann eine gewünschte Helligkeit exakter eingestellt werden, da eine Information über die angeschlossenen Leuchtmittel vorliegt.

Die Bestimmung des Typ eines Leuchtmittel L oder der Topologie mehrerer Leuchtmittel (L1 bis L4) kann beispielsweise einmalig bei der ersten Inbetriebnahme des Betriebsgeräts erfolgen. Sofern im Betriebsgerät oder in einer zentralen Steuereinheit ein Speicher vorhanden ist, kann das Ergebnis der Bestimmung und die entsprechenden Parameter in dem Speicher abgelegt werden.

Insbesondere wenn das Betriebsgerät nicht über eine nichtflüchtige Speichermöglichkeit verfügt, kann die Messung zur Bestimmung auch bei jedem neuerlichen Einschalten (Wiederanlegen einer Versorgungsspannung) erfolgen.

Die Messung zur Bestimmung kann auch jedes Mal erfolgen, wenn ein Lampenwechsel während des Betriebs oder auch beispielweise nach einem Einschalten des Betriebsgerätes aufgrund einer zusätzlichen Erkennungsmessung (beispielsweise eine Wendelwiderstandsmessung) festgestellt wird. Die Messung zur Bestimmung kann aber auch durch einen Steuerbefehl oder eine bestimmte Schaltsequenz (beispielsweise kurzzeitiges mehrfaches Schalten der Versorgungsspannung) ausgelöst werden.

## Patentansprüche

1. Verfahren zur Bestimmung des Typ eines Leuchtmittel (L) oder der Topologie mehrerer Leuchtmittel (L1 bis L4), das/die mit einer Wechselspannung variabler Frequenz (f) betrieben wird/werden,
**dadurch gekennzeichnet, dass**
bei dem die dem/den Leuchtmittel/n zugeführte Leistung durch Variation der Frequenz (f) auf einen bestimmten Wert geregelt wird,
und bei dem die sich in Folge der Regelung einstellende Frequenz (f) durch Vergleich mit bekannten Frequenzwerten zur Typ- oder Topologiebestimmung ausgewertet wird.

2. Verfahren nach Anspruch 1,
bei dem die Wechselspannung konstant geregelt wird.

3. Verfahren nach einem der vorhergehenden Ansprüche,
bei dem die Messung der Frequenz (f) bei,einer der/den Leuchtmittel/n (L1 bis L4) geführten Leistung erfolgt, die gegenüber der Maximalleistung reduziert ist.

4. Verfahren nach Anspruch 3,
bei dem die reduzierte Leistung einem Dimmgrad von weniger als 50 %, vorzugsweise weniger als 10 % und noch weiter bevorzugt von ca. 1 % entspricht.

5. Verfahren nach einem der vorstehenden Ansprüche, bei dem das/die Leuchtmittel von einer bzw. mehreren Leuchtstofflampen (L1 bis L4) gebildet ist/sind.

6. Verfahren, nach einem der vorhergehenden Ansprüche,
bei dem das Ergebnis einer Bestimmung des Leuchtmitteltyps oder der Leuchtmitteltopologie von Leuchtmitteln, die durch ein Betriebsgerät versorgt werden, von diesem Betriebsgerät drahtlos oder über einen angeschlossenen Bus an eine zentrale Steuereinheit und/oder an wenigstens ein weiteres Betriebsgerät gesandt wird.

7. Verfahren nach einem der vorhergehenden Ansprüche,
wobei die Bestimmung einmalig, insbesondere bei der ersten Inbetriebnahme, oder wiederholt, insbesondere bei jedem Wiedereinschalten einer Versorgungsspannung des Betriebsgeräts durchgeführt wird.

8. Verfahren nach einem der vorhergehenden Ansprüche,
wobei das Ergebnis der Bestimmung oder ein oder mehrere daraus abgeleitete Parameter in einem Speicher abgelegt werden, der bspw. dem die Bestimmung durchführenden Betriebsgerät oder einer zentralen Steuereinheit zugeordnet ist.

9. Integrierte Steuerschaltung, insbesondere digital implementiert, insbesondere als ASIC oder Mikroprozessor, die zu Ausführung eines Verfahrens nach einem der vorhergehenden Ansprüche ausgebildet ist.

10. Betriebsgerät zum Betreiben eines Leuchtmittels, aufweisend eine Steuerschaltung nach Anspruch 9.

11. Leuchte, aufweisend wenigstens ein Leuchtmittel sowie ein Betriebsgerät nach Anspruch 10.

12. Betriebsgerät zum Betreiben eines Leuchtmittels oder eines aus mehreren Leuchtmitteln bestehenden Leuchtmittel-Packs (LP), aufweisend
eine Gleichspannungsquelle,
einen sich an die Gleichspannungsquelle anschließenden Wechselrichter mit getakteten Schaltern (S1, S2), einen sich an den Wechselrichter (S1, S2) anschließenden Serienresonanzkreis (D, C3) zu dessen Resonanzkapazität (C3) das Leuchtmittel (L) bzw. der Leuchtmittel-Pack (LP) parallel zu schalten ist,
einen Leistungsregler (3), der als Stellwert die Schaltfrequenz (f) für die Schalter (S1, S2) ausgibt, dem als Ist-Wert der durch den Wechselrichter fließende Strom (U_{I}) sowie die Gleichspannung (U_{Z}) der Gleichspannungsquelle und/oder die Spannung (U_{L}) über dem Leuchtmittel (L) bzw. dem Leuchtmittel-Pack (LP) und ferner extern oder intern ein Soll-Wert zugeführt wird, und Mittel, die die von dem Leistungsregler (3) ausgegebene Schaltfrequenz (f) mit bekannten Schaltfrequenzwerten vergleicht und dadurch den Typ des angeschlossenen Leuchtmittels (L) oder die Topologie der das Leuchtmittel-Pack (LP) bildenden Leuchtmittel bestimmt.

13. Betriebsgerät nach Anspruch 12,
weiterhin aufweisend Mittel, die aufgrund des bestimmten Leuchtmittel-Typs oder der Topologie des Leuchtmittel-Packs den/die passenden Betriebsparameter für das Leuchtmittel (L) bzw. das Leuchtmittel-Pack (LP) einstellen.

14. Betriebsgerät nach Anspruch 12 oder 13,
aufweisend ferner Mittel (2) zum Konstanthalten oder Konstantregeln der Gleichspannung (U_{Z}) der Gleichspannungsquelle.

15. Betriebsgerät nach einem der Ansprüche 12 bis 14,
bei dem die Gleichspannungsquelle von einem an das Netz anzuschließenden Gleichrichter (1) gebildet ist.

16. Betriebsgerät nach einem der Ansprüche 12 bis 15,
bei dem das/die Leuchtmittel (L1 bis L4) von einer bzw. mehreren Leuchtstofflampen gebildet ist.

17. Betriebsgerät nach einem der Ansprüche 12 bis 16,
bei dem der Soll-Wert für den Leistungsregler (3) ein Dimmsignal ist, welches die von dem/den Leuchtmittel/n (L1 bis L4) aufgenommene Leistung auf weniger als 50 %, vorzugsweise weniger als 10 % und noch weiter bevorzugt auf ca. 1 % reduziert.

18. Beleuchtungssystem,
aufweisend ein Betriebsgerät nach einem der Ansprüche 12 bis 17,
sowie wenigstens ein damit drahtlos oder drahtgebunden in Datenaustausch stehendes weiteres Betriebsgerät und/oder zentrale Steuereinheit.

19. Beleuchtungssystem nach Anspruch 18,
bei dem ein Betriebsgerät Daten bzgl. der von ihm vorgenommenen Lampentyp- oder Lampentopologie-Bestimmung an ein weiteres Betriebsgerät oder an die zentrale Steuereinheit sendet.

20. Beleuchtungssystem nach Anspruch 19,
bei dem die zentrale Steuereinheit abhängig von den erhaltenen Bestimmungsdaten Befehle, Helligkeitsbefehle, vorzugsweise an das die Bestimmungsdaten aussendende Betriebsgerät sendet.

21. Verfahren zur Bestimmung der Topologie mehrerer Leuchtmittel (L1 bis L4), mit einem Betriebsgerät, das einen Wechselrichter zur Erzeugung einer Wechselspannung aufweist,
wobei die Frequenz der den Leuchtmitteln zugeführten Wechselspannung während der Bestimmung konstant ist, und bei dem die sich bei dieser kontanten Frequenz einstellende Spannung über den Leuchtmitteln zur Bestimmung der Topologie der mehreren Leuchtmittel (L1 bis L4) ausgewertet wird.

## Claims

1. A method for determining the type of lamp (L) or the topology of a plurality of lamps (L1 to L4), which is/are operated using alternating voltage having variable frequency (f),
**characterized in that**
wherein the power supplied to the lamp(s) is controlled at a specific value by variation of the frequency (f),
and wherein the frequency (f) obtained as a result of the control is evaluated by comparison with known frequency values for the determination of the type or topology.

2. A method according to Claim 1,
wherein the alternating voltage is controlled to be constant.

3. A method according to any one of the preceding claims, wherein the measurement of the frequency (f) takes place at a power supplied to the lamp(s) (L1 to L4), which is reduced compared to the maximum power.

4. A method according to Claim 3,
in which the reduced power corresponds to a dimming level of less than 50%, preferably less than 10%, even more preferably of approx. 1%.

5. A method of any one of the preceding claims, in which the lamp(s) is/are formed from one or several fluorescent lamps (L1 to L4).

6. A method according to any one of the preceding claims,
in which the result of a determination of the type of lamp or the lamp topology of the lamps, which are provided by the operating device, is sent by this operating device wirelessly and via a connecting bus to a central control unit and/or to at least another operating device.

7. A method according to any one of the preceding claims, wherein the determination is made once, in particular during the initial commissioning, or repeatedly, in particular during each switching back on of a supply voltage of the operating device.

8. A method according to any one of the preceding claims, wherein the result of the determination or one or several parameters derived therefrom are stored in a memory, to which, for example, the operating device carrying out the determination or a central control unit is assigned.

9. An integrated control circuit, in particular implemented digitally, in particular as an ASIC or microprocessor, which is designed for implementing a method according to any one of the preceding claims.

10. An operating device for operating a lamp, having a control circuit according to Claim 9.

11. A light, having at least one lamp as well as an operating device according to Claim 10.

12. An operating device for operating a lamp or a lamp pack (LP) consisting of several lamps, having a DC voltage source, an inverter connecting to the DC voltage source with clocked switches (S1, S2), a series resonance circuit (D, C3) connecting to the inverter (S1, S2), to the resonance capacitor (C3) of which the lamp (L) or the lamp-pack (LP) must be connected in parallel,
a power controller (3), which as a control value outputs the switching frequency (f) for the switches (S1, S2), at which as an actual value (U_{I}) the power flowing through the inverter as well as the DC voltage (Uz) of the DC voltage source and/or the voltage (U_{L}) over the lamp (L) or the lamp-pack (LP) and also externally or internally a target value is supplied, and means, which compare the switching frequency (f) outputted by the power controller (3) with the known switching frequency values and thus determine the type of the connecting lamp (L) or the topology of the lamp forming the lamp pack (LP).

13. An operating device according to Claim 12, having in addition means, which due to the determined lamp type or the topology of the lamp pack set the appropriate operating parameters for the lamp (L) or the lamp pack (LP).

14. An operating device according to Claim 12 or 13, having further means (2) for holding the DC voltage (Uz) of the DC voltage source constant or controlling it to be constant.

15. An operating device according to any one of claims 12 to 14, in which the DC voltage source is formed by a rectifier (1) to be connected to the electrical network.

16. An operating device according to any one of Claims 12 to 15, in which the lamp(s) (L1 to L4) are formed from one or several fluorescent lamps.

17. An operating device according to any one of Claims 12 to 16, in which the target value for the power controller (3) is a dimming signal, which reduces the power consumed by the lamp(s) (L1 to L4) to less than 50%, preferably less than 10% and even more preferably to approx. 1%.

18. A lighting system,
having an operating device according to any one of Claims 12 to 17,
as well as at least one further operating device and/or central control unit engaged in wireless or wired data exchange.

19. A lighting system according to Claim 18,
in which an operating device sends data with regard to the determination of the type of lamp or lamp topology carried out by it to a further operating device or to the central control unit.

20. A lighting system according to Claim 19,
in which the central control unit, depending on the determination data received, sends commands, brightness commands, preferably to the operating device emitting the determination data.

21. A method for determining the topology of a plurality of lamps (L1 to L4) with an operating device, which has an inverter for generating an alternating voltage,
wherein the frequency of the alternating voltage supplied to the lamps is constant during the determination, and in which the voltage set at this constant frequency over the lamps is evaluated to determine the topology of the plurality of lamps (L1 to L4).

## Revendications

1. Procédé pour la détermination du type de moyen d'éclairage (L) ou de la topologie de plusieurs moyens d'éclairage (L1 à L4), qui est/sont utilisé(s) avec une tension alternative de fréquence variable (f),
**caractérisé en ce que**
dans ce procédé, la puissance envoyée au(x) moyen(s) d'éclairage est régulée en faisant varier la fréquence (f) vers une valeur déterminée,
et dans ce procédé, la fréquence (f) obtenue par la régulation est analysée en la comparant avec des valeurs de fréquences connues afin de déterminer le type ou la topologie.

2. Procédé selon la revendication 1, dans lequel la tension alternative est régulée de manière constante.

3. Procédé selon l'une des revendications précédentes, dans lequel la mesure de la fréquence (f) a lieu à une puissance envoyée au(x) moyen(s) d'éclairage (L1 à L4) qui est réduite par rapport à la puissance maximale.

4. Procédé selon la revendication 3, dans lequel la puissance réduite correspond à un taux d'atténuation inférieur à 50 %, de préférence inférieur à 10 % et de préférence inférieur à environ 1 %.

5. Procédé selon l'une des revendications précédentes, dans lequel le(s) moyen(s) d'éclairage est/sont constitué(s) d'une ou plusieurs lampes fluorescentes.

6. Procédé selon l'une des revendications précédentes, dans lequel le résultat d'une détermination du type de moyen d'éclairage ou de la topologie du moyen d'éclairage, qui est introduit par un équipement d'exploitation, est envoyé par celui-ci sans fil ou par l'intermédiaire d'un bus connecté à une unité de commande centrale et/ou à au moins un autre équipement d'exploitation.

7. Procédé selon l'une des revendications précédentes, la détermination étant effectuée une seule fois, plus particulièrement lors de la première mise en service ou de manière répétée, plus particulièrement à chaque remise en marche d'une tension d'alimentation de l'équipement d'exploitation.

8. Procédé selon l'une des revendications précédentes, le résultat de la détermination ou un ou plusieurs paramètres qui en sont dérivés, sont enregistrés dans une mémoire qui correspond, par exemple, à l'équipement d'exploitation effectuant la détermination ou à une unité de commande centrale.

9. Circuit de commande intégré, plus particulièrement numérique, plus particulièrement sous la forme d'un ASIC ou d'un micro-processeur, qui est conçu pour la mise en oeuvre d'un procédé selon l'une des revendications précédentes.

10. Équipement d'exploitation pour l'exploitation d'un moyen d'éclairage, comprenant un circuit de commande selon la revendication 9.

11. Luminaire comprenant au moins un moyen d'éclairage ainsi qu'un équipement d'exploitation selon la revendication 10.

12. Équipement d'exploitation pour l'exploitation d'un moyen d'éclairage ou d'un pack de moyens d'éclairage (LP) constitués de plusieurs moyens d'éclairage, comprenant une source de tension continue,
un onduleur connecté à la source de tension continue, avec des interrupteurs cadencés (S1, S2), un circuit de résonance en série (D, C3), connecté à l'onduleur (S1, S2), à la capacité de résonance (C3) duquel le moyen d'éclairage (L) ou le pack de moyens d'éclairage (LP) doit être branché en parallèle,
un régulateur de puissance (3) qui envoie, en tant que valeur de réglage, la fréquence de commutation (f) pour les interrupteurs (S1, S2), auquel est envoyé, en tant que valeur réelle, le courant s'écoulant dans l'onduleur (U_{I}) ainsi que la tension continue (U_{Z}) de la source de tension continue et/ou la tension (U_{L}) par l'intermédiaire du moyen d'éclairage (L) ou du pack de moyens d'éclairage (LP), et auquel est envoyé, en outre, en externe ou en interne, une valeur de consigne, et des moyens qui comparent la fréquence de commutation (f) générée par le régulateur de puissance (3) avec des valeurs de fréquences de commutation connues et détermine donc le type de moyen d'éclairage (L) connecté ou la topologie des moyens d'éclairage constituant le pack de moyens d'éclairage (LP).

13. Équipement d'exploitation selon la revendication 12, comprenant en outre des moyens qui, sur la base du type de moyen d'éclairage et/ou de la topologie du pack de moyens d'éclairage, règlent le(s) paramètre(s) d'exploitation adapté(s) pour le moyen d'éclairage (L) ou le pack de moyens d'éclairage (LP).

14. Équipement d'exploitation selon la revendication 12 ou 13, comprenant en outre des moyens (2) pour le maintien constant ou la régulation constante de la tension continue (Uz) de la source de tension continue.

15. Équipement d'exploitation selon l'une des revendications 12 à 14, dans lequel la source de tension continue est constituée d'un redresseur (1) connecté au réseau.

16. Équipement d'exploitation selon l'une des revendications 12 à 15, dans lequel le(s) moyen(s) d'éclairage (L1 à L4) est/sont constitué(s) d'une ou plusieurs lampes fluorescentes.

17. Équipement d'exploitation selon l'une des revendications 12 à 16, dans lequel la valeur de consigne pour le régulateur de puissance (3) est un signal d'atténuation qui réduit la puissance absorbée par le(s) moyen(s) d'éclairage (L1 à L4) à moins de 50 %, de préférence à moins de 10 % et de préférence à environ 1 %.

18. Système d'éclairage comprenant un équipement d'exploitation selon l'une des revendications 12 à 17, ainsi qu'au moins un autre équipement d'exploitation et/ou une unité de commande centrale permettant d'échanger des données avec celui-ci sans fil ou à l'aide d'un câble.

19. Système d'éclairage selon la revendication 18, dans lequel un équipement d'exploitation envoie des données concernant la détermination, effectuée par celui-ci, du type de lampe ou de la topologie de lampe, à un autre équipement d'exploitation ou à l'unité de commande centrale.

20. Système d'éclairage selon la revendication 19, dans lequel l'unité de commande centrale envoie, en fonction des données de détermination reçues, des instructions, des instructions de luminosité, de préférence à l'équipement d'exploitation qui envoie les données de détermination.

21. Procédé de détermination de la topologie de plusieurs moyens d'éclairage (L1 à L4), avec un équipement d'exploitation qui comprend un onduleur pour générer une tension alternative,
la fréquence de la tension alternative appliquée aux moyens d'éclairage étant constante pendant la détermination et dans lequel la tension obtenue à cette fréquence constante est analysée par l'intermédiaire des moyens d'éclairage pour la détermination de la topologie des plusieurs moyens d'éclairage (L1 à L4).
